# EUROPEAN PATENT APPLICATION

(11) **EP 4 742 389 A1**
(43) Date of publication of application: **13.05.2026**
(21) Application number: 25215017.2
(22) Date of filing: 11.11.2025
(51) Int. Cl.: H01M 50/178, H01M 50/586, H01M 50/593, H01M 50/595, H01M 50/287

(54) **BATTERY AND ELECTRONIC APPARATUS**

(30) Priority: 11.11.2024 CN 202422739703 U
(71) Applicant: Zhuhai Cosmx Power Co., Ltd., Zhuhai, Guangdong 519180 (CN)
(72) Inventor: WANG, Zhengchun, Zhuhai, 519180 (CN); SUN, Yali, Zhuhai, 519180 (CN); JIANG, Ziqiang, Zhuhai, 519180 (CN); ZONG, Yanzhen, Zhuhai, 519180 (CN)
(74) Representative: Murgitroyd & Company

(57) **Abstract**

A battery includes: a cell (1) provided with a tab (11); a protection board assembly (2) connected to a top end of the cell and provided with a conductive sheet (21), the conductive sheet being connected to the tab; and a head tape (3)having two ends respectively connected to front and back surfaces of a head of the cell and wrapped around a periphery of the protection board assembly, the head tape being provided with at least one layer of protective adhesive (31) at a position corresponding to the tab.

## Description

### TECHNICAL FIELD

The present invention relates to the technical field of battery structures, and in particular, to a battery and an electronic apparatus including the battery.

### BACKGROUND

As a core component providing energy, a battery plays an important role in an electronic apparatus. The battery includes a cell and a protection board assembly. A tab of the cell is electrically connected to a conductive sheet of the protection board assembly. The protection board assembly is located at an end of the cell where the tab is located. After the protection board assembly is connected to the cell, a head tape is attached to the end of the cell where the tab is located, and is wrapped around a periphery of the protection board assembly.

However, after the protection board assembly is connected to the cell, the tab may extend beyond an edge of the protection board assembly, and come into contact with the head tape. The tab is extremely thin, and thus has a very sharp end or bent portion, or the like, similar to a blade, which can easily cut through the head tape, leading to the risk of a short circuit caused by electric conduction between the tab and a chassis of the electronic apparatus.

Therefore, how to prevent the tab from cutting through the head tape is an urgent problem to be solved by those skilled in the art.

### SUMMARY

In view of this, an object of the present invention is to provide a battery, which prevents its tab from cutting through its head tape and has good safety.

Another object of the present invention is to provide an electronic apparatus including the battery described above, which prevents a tab of the battery from cutting through a head tape of the battery and has good safety.

In order to achieve the above objectives, the present invention provides the following technical solutions.

A battery includes:
a cell provided with a tab;
a protection board assembly connected to a top end of the cell and provided with a conductive sheet, the conductive sheet being connected to the tab; and
a head tape having two ends respectively connected to front and back surfaces of the cell and wrapped around a periphery of the protection board assembly, the head tape being provided with at least one layer of protective adhesive at a position corresponding to the tab.

Optionally, a top sealing edge is provided at the top end of the cell, the top sealing edge includes a first bent portion and a flat portion, the flat portion is parallel to an end face of the cell, the protection board assembly is disposed on a surface of the flat portion away from the cell, and a thickness direction of the protection board assembly is in a height direction of the cell.

Optionally, the tab includes a second bent portion and a connecting portion, the conductive sheet is formed with a U-shaped groove, and the connecting portion is disposed in the U-shaped groove; and
the protective adhesive is disposed at the position corresponding to the second bent portion.

Optionally, the head tape includes a cell connecting portion connected to the cell, and an end of the protective adhesive in a height direction of the cell extends to a first boundary of the cell connecting portion on a side close to the protective adhesive, or is spaced apart from the first boundary.

Optionally, the head tape includes a top-surface connecting portion connected to a top surface of the protection board assembly, and an end of the protective adhesive in a height direction of the cell extends to a second boundary of the top-surface connecting portion on a side close to the protective adhesive, or is spaced apart from the second boundary.

Optionally, the protective adhesive is disposed on an inner side of the head tape.

Optionally, the protective adhesive has a length equal to or less than a length of the head tape in a direction parallel to a width of the cell.

Optionally, a first double-sided adhesive is provided between the protection board assembly and the cell, at least two conductive sheets are provided, a first flexible cushioning member is provided in a gap between any two of the conductive sheets, one side of the first flexible cushioning member is connected to the first double-sided adhesive, a second double-sided adhesive is provided on the other side of the first flexible cushioning member, and the second double-sided adhesive is connected to the protection board assembly.

Optionally, the first flexible cushioning member has a same thickness as the conductive sheet.

Optionally, the first flexible cushioning member has a greater thickness than the conductive sheet.

Optionally, the protection board assembly includes a protection board and a flexible printed circuit board, the flexible printed circuit board including a first end and a second end that are spaced apart by a preset distance; and the battery further includes:
a fixing adhesive connected to a side surface of each of the first end and the second end that is away from the protection board.

Optionally, the battery further includes a second flexible cushioning member disposed between the first end and the second end and connected to the fixing adhesive and the protection board.

Optionally, the second flexible cushioning member has a same thickness as the flexible printed circuit board, or the second flexible cushioning member has greater thickness than the flexible printed circuit board.

Optionally, the second flexible cushioning member has a length less than or equal to a length of the fixing adhesive in a direction perpendicular to a line connecting the first end to the second end.

An electronic apparatus includes any one of the batteries described above.

The battery of the present invention has the following beneficial effects.

Since the head tape is provided with at least one layer of protective adhesive at the position corresponding to the tab, a portion of the head tape corresponding to the tab forms a double-layer structure or a structure of at least three layers. This is equivalent to increasing a thickness of the head tape at the position of the head tape corresponding to the tab, and thus enhancing the puncture resistance strength of the head tape. In this way, even if the tab extends beyond an edge of the protection board assembly and comes into contact with the head tape, the tab is prevented from completely cutting through the head tape. That is, this solution reduces the risk of the head tape being cut through, provides better insulation for the tab and the protection board assembly, and reduces the risk of a short circuit caused by electric conduction between the tab and a chassis of the electronic apparatus.

### BRIEF DESCRIPTION OF THE DRAWINGS

To describe the technical solutions in embodiments of the present invention or in the related art more clearly, the following briefly describes the accompanying drawings required for describing the embodiments or the related art. It is clear that the accompanying drawings in the following descriptions are merely embodiments of the present invention, and those of ordinary skill in the art may still derive other drawings from the provided accompanying drawings without creative efforts.
FIG. 1 is a side view of a battery according to a specific embodiment of the present invention.
FIG. 2 is a partial enlarged view of part A in FIG. 1.
FIG. 3 is a schematic diagram showing that two ends of a protective adhesive extend to two ends of a head tape in a direction parallel to a width of a cell.
FIG. 4 is a schematic diagram showing that there is a distance between each of two ends of the protective adhesive and an edge of each of two ends of the head tape in the direction parallel to the width of the cell.
FIG. 5 is a front view of the battery shown in FIG. 1.
FIG. 6 is a partial enlarged view of part B in FIG. 5.
FIG. 7 is a side view of a first flexible cushioning member disposed on a first double-sided adhesive and corresponding to a gap between two conductive sheets.
FIG. 8 is a top view of FIG. 7.
FIG. 9 is a schematic diagram of a laminated structure of a first double-sided adhesive, a first flexible cushioning member, and a second double-sided adhesive.
FIG. 10 is a schematic diagram of a second flexible cushioning member disposed on a fixing adhesive and corresponding to a gap between a first end and a second end of a flexible printed circuit board.

Reference signs: 1 - cell; 11 - tab; 111 - second bent portion; 112 - connecting portion; 12 - top sealing edge; 121 - first bent portion; 122 - flat portion; 2 - protection board assembly; 21 - conductive sheet; 22 - protection board; 23 - flexible printed circuit board; 231 - first end; 232 - second end; 3 - head tape; 31 - protective adhesive; 32 - cell connecting portion; 33 - top-surface connecting portion; 4 - first double-sided adhesive; 41 - first double-sided adhesive substrate; 42 - first double-sided adhesive top adhesive; 43 - first double-sided adhesive bottom adhesive; 5 - first flexible cushioning member; 6 - second double-sided adhesive; 7 - fixing adhesive; 8 - second flexible cushioning member.

### DETAILED DESCRIPTION OF THE EMBODIMENTS

The technical solutions in the embodiments of the present invention will be clearly and completely described below with reference to the accompanying drawings in the embodiments of the present invention. Apparently, the embodiments described are some of, rather than all of, the embodiments of the present invention. All other embodiments obtained by those of ordinary skill in the art based on the embodiments of the present invention without creative efforts shall fall within the scope of protection of the present invention.

A core of the present invention is to provide a battery, which prevents its tab from cutting through its head tape and has good safety. Another core of the present invention is to provide an electronic apparatus including a battery described above, which prevents a tab of the battery from cutting through a head tape of the battery and has good safety.

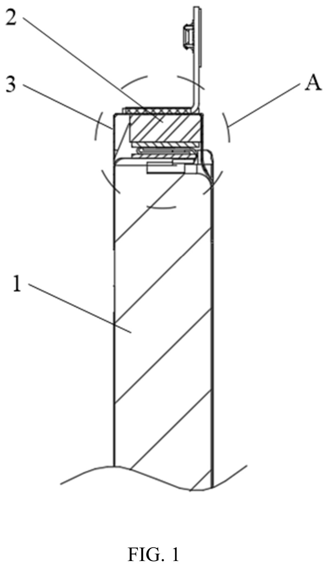

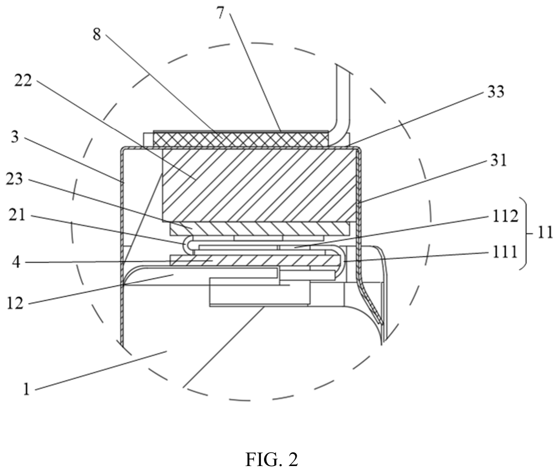

Referring to FIG. 1 and FIG. 2, an embodiment of the present invention provides a battery, including a cell 1, a protection board assembly 2 and a head tape 3, where the cell 1 is provided with a tab 11; the protection board assembly 2 is connected to a top end of the cell 1, the protection board assembly 2 is provided with a conductive sheet 21, and the conductive sheet 21 is connected to the tab 11; and the head tape 3 has two ends respectively connected to front and back surfaces of the cell 1 and is wrapped around a periphery of the protection board assembly 2, and the head tape 3 is provided with at least one layer of protective adhesive 31 at a position corresponding to the tab 11.

That is, according to the embodiment of the present invention, since the head tape 3 is provided with at least one layer of protective adhesive 31 at the position corresponding to the tab 11, a portion of the head tape 3 corresponding to the tab 11 forms a double-layer structure or a structure of at least three layers. This is equivalent to increasing a thickness of the head tape 3 at the position of the head tape 3 corresponding to the tab 11, and thus enhancing the puncture resistance strength of the head tape 3. In this way, even if the tab 11 extends beyond an edge of the protection board assembly 2 and comes into contact with the head tape 3, the tab 11 is prevented from completely cutting through the head tape 3. That is, this solution reduces the risk of the head tape 3 being cut through, provides better insulation for the tab 11 and the protection board assembly 2, and reduces the risk of a short circuit caused by electric conduction between the tab 11 and a chassis of the electronic apparatus.

It should be noted that the focus of this embodiment is to ensure that the head tape 3 is provided with the protective adhesive 31 at the position corresponding to the tab 11, and a portion of the head tape 3 other than the position corresponding to the tab 11 may or may not have the protective adhesive 31. It will be understood that when the portion of the head tape 3 other than the position corresponding to the tab 11 also has the protective adhesive 31, the head tape 3 is of an integral double-layer structure or structure of at least three layers, and after the head tape 3 of this structure is connected to the cell 1, the size of the battery will be increased, and thus the energy density of the battery is reduced; therefore, in order to solve the technical problem, in some embodiments, the portion of the head tape 3 other than the position corresponding to the tab 11 does not have the protective adhesive 31, that is, the head tape 3 is of a local double-layer structure or a local structure of at least three layers only in a weak area near the tab 11, which avoids increasing a size of the battery and reducing the energy density of the battery, while ensuring that the head tape 3 is not cut through by the tab 11.

In addition, the two ends of the head tape 3 are respectively connected to the front and back surfaces of the cell 1. It will be understood that the head tape 3 is mainly disposed at an end of the cell 1 provided with the tab 11 and is used for connecting the protection board assembly 2 to the cell 1. Accordingly, in some embodiments, the two ends of the head tape 3 are respectively connected to the front and back surfaces of the cell 1 close to the end where the tab 11 is located.

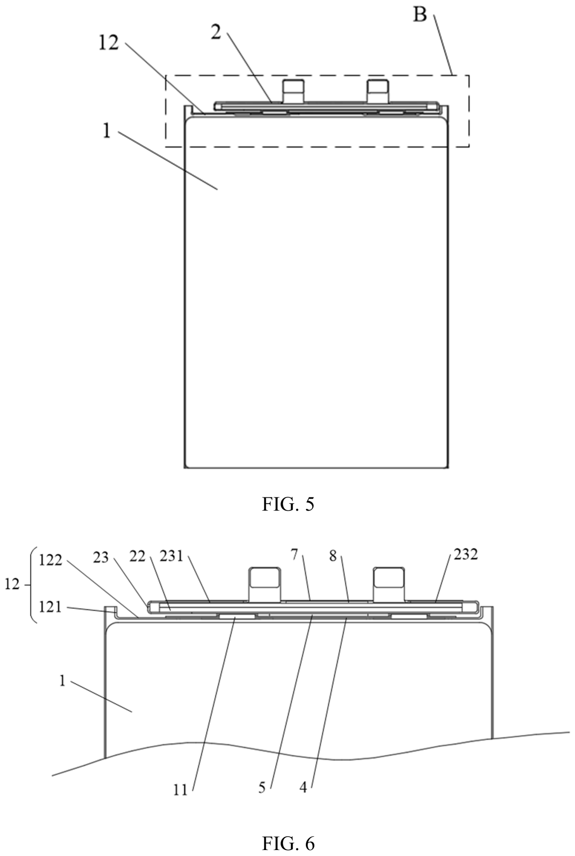

In addition, as shown in FIG. 2 and FIG. 6, in some embodiments, a top sealing edge 12 is provided at the top end of the cell 1, the top sealing edge 12 includes a first bent portion 121 and a flat portion 122, the flat portion 122 is parallel to an end face of the cell 1, the protection board assembly 2 is disposed on a surface of the flat portion 122 away from the cell 1, and a thickness direction of the protection board assembly 2 is in a height direction of the cell 1.

That is, in this embodiment, the top sealing edge 12 is bent toward the end face of the cell 1 and then flattened, such that the top sealing edge 12 has the flat portion 122 parallel to the end face of the cell 1. After the protection board assembly 2 is disposed on the surface of the flat portion 122 away from the cell 1, the thickness direction of the protection board assembly 2 is in the height direction of the cell 1, thereby compacting the structure and reducing a space occupied by the structure.

In addition, with continued reference to FIG. 2, in some embodiments, the tab 11 includes a second bent portion 111 and a connecting portion 112, the conductive sheet 21 is formed with a U-shaped groove, and the connecting portion 112 is disposed in the U-shaped groove; and the protective adhesive 31 is disposed at the position corresponding to the second bent portion 111.

That is, in this embodiment, the conductive sheet 21 is bent into a U-shaped conductive sheet 21, the U-shaped conductive sheet 21 forms the U-shaped groove, the connecting portion 112 of the tab 11 extends into the U-shaped groove from an opening of the U-shaped groove, a free end of the connecting portion 112 faces the bottom of the U-shaped groove, the free end of the connecting portion 112 is protected by means of the closed bottom of the U-shaped groove, the other end of the connecting portion 112 is connected to the second bent portion 111, and the second bent portion 111 is exposed outside the opening of the U-shaped groove. Typically, the tab 11 is extremely thin, for example, the tab 11 has a thickness of 0.08 mm or 0.1 mm, and the double thickness of the tab 11 after bending is only 0.16 mm or 0.2 mm, making the tab similar to an extremely thin blade, which is easily to cut through the head tape 3. Therefore, in this embodiment, the protective adhesive 31 is disposed on the portion of the head tape 3 corresponding to the second bent portion 111 of the tab 11, and the protective adhesive 31 is aligned with the second bent portion 111, thereby preventing the second bent portion 111 of the tab 11 from cutting through the head tape 3.

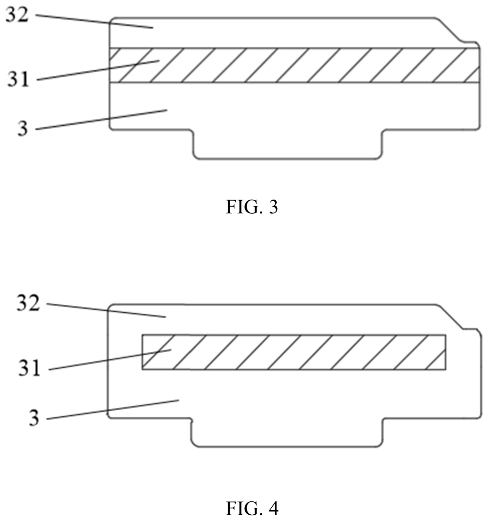

In addition, referring to FIG. 3 and FIG. 4, in order to avoid increasing a thickness of the battery, in some embodiments, the head tape 3 includes a cell connecting portion 32 connected to the cell 1, and an end of the protective adhesive 31 in the height direction of the cell 1 extends to a first boundary of the cell connecting portion 32 on a side close to the protective adhesive 31, or is spaced apart from the first boundary. That is, in this embodiment, the protective adhesive 31 is not disposed at the cell connecting portion 32, the protective adhesive 31 does not overlap with the cell connecting portion 32, and there is no overlapping area therebetween, thereby preventing the protective adhesive 31 from adhering onto the cell 1, avoiding affecting the thickness of the battery by the provision of the protective adhesive 31, and ensuring the energy density of the battery.

In addition, referring to FIG. 2, in order to avoid increasing a length of the battery, in some embodiments, the head tape 3 includes a top-surface connecting portion 33 connected to a top surface of the protection board assembly 2, and an end of the protective adhesive 31 in the height direction of the cell 1 extends to a second boundary of the top-surface connecting portion 33 on a side close to the protective adhesive 31, or is spaced apart from the second boundary. That is, in this embodiment, the protective adhesive 31 is disposed in the thickness direction of the protection board assembly 2, and the protective adhesive 31 is not disposed at the position corresponding to the top surface of the protection board assembly 2. That is, the protective adhesive 31 is disposed in the height direction of the cell 1 and does not extend to the end face of the cell 1; and the top of the protective adhesive 31 is below the second boundary, the protective adhesive 31 does not overlap with the top-surface connecting portion 33 of the head tape 3, and there is no overlapping area therebetween, thereby preventing the protective adhesive 31 from adhering to the top surface of the protection board assembly 2, avoiding increasing the length of the battery caused by the provision of the protective adhesive 31, and ensuring the energy density of the battery.

In addition, with continued reference to FIG. 2, in order to prevent the outer shape of the protective adhesive 31 at a position where the head tape 3 is disposed from protruding beyond that of the head tape 3 at other positions, in some embodiments, the protective adhesive 31 is disposed on an inner side of the head tape 3. That is, the protective adhesive 31 is not only disposed corresponding to the tab 11, but also disposed on a side of the head tape 3 facing the tab 11, that is, it is disposed on the inner side of the head tape 3, which ensures the overall uniformity of an outer side of the head tape 3, and prevent the outer shape of the head tape 3 at the position where the protective adhesive 31 is disposed from protruding beyond that of the head tape 3 at other positions, thereby ensuring the overall uniformity and aesthetics of the head tape 3 in terms of outer shape, and avoiding increasing the overall thickness dimension occupied by the head tape 3.

In addition, referring to FIG. 3 and FIG. 4, in order to prevent the protective adhesive 31 from extending beyond the head tape 3, in some embodiments, the protective adhesive 31 has a length equal to or less than a length of the head tape 3 in the direction parallel to the width of the cell 1. That is, in the direction parallel to the width of the cell 1, the length of the protective adhesive 31 is not limited, as long as, in the case of the protective adhesive 31 being aligned with the tab 11, the protective adhesive 31 is located within an area of the head tape 3 in the direction parallel to the width of the cell 1, thereby preventing the protective adhesive 31 from being exposed outside of the head tape 3. As shown in FIG. 3, in some embodiments, the length of the protective adhesive 31 in the direction parallel to the width of the cell 1 is equal to the length of the head tape 3, that is, two ends of the protective adhesive 31 extend to two ends of the head tape 3 and are flush with the two ends of the head tape 3, respectively. Of course, in some other embodiments, there is a distance between at least one end of the protective adhesive 31 and a corresponding edge of the head tape 3 in the direction parallel to the width of the cell 1. As shown in FIG. 4, there is a distance between each of two ends of the protective adhesive 31 and an edge of each of two ends of the head tape 3.

In addition, it will be understood that the protection board assembly 2 is connected to the cell 1 by means of a double-sided adhesive, such that the protection board assembly 2 is bonded onto the cell 1, thereby improving the positional stability of the protection board assembly 2. However, in the related art, since a plurality of conductive sheets 21 are generally provided on the protection board assembly 2, each of the conductive sheets 21 has a certain thickness, and no double-sided adhesive is provided at a gap between the conductive sheets 21, the bonding area is reduced, resulting in the protection board assembly 2 not being firmly fixed. Consequently, when a battery falls, the protection board assembly 2 is likely to displace relative to the cell 1, which may tear the tab 11 and cause the battery to fail and become unusable.

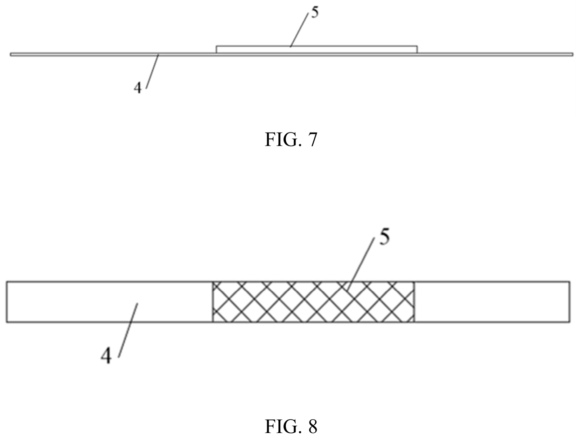

In order to solve the technical problem, referring to FIG. 5 to FIG. 9, in some embodiments, a first double-sided adhesive 4 is provided between the protection board assembly 2 and the cell 1, at least two conductive sheets 21 are provided, a first flexible cushioning member 5 is provided in a gap between any two of the conductive sheets 21, one side of the first flexible cushioning member 5 is connected to the first double-sided adhesive 4, a second double-sided adhesive 6 is provided on the other side of the first flexible cushioning member 5, and the second double-sided adhesive 6 is connected to the protection board assembly 2. It will be understood that the first double-sided adhesive 4 has a first double-sided adhesive substrate 41 and a first double-sided adhesive top adhesive 42 and a first double-sided adhesive bottom adhesive 43 respectively located on two sides of the first double-sided adhesive substrate 41, where the first double-sided adhesive bottom adhesive 43 is connected to the first flexible cushioning member 5, and the top adhesive of the first flexible cushioning member 5 is connected to the cell 1; the second double-sided adhesive 6 has the same structure as the first double-sided adhesive 4, which will not be repeated here; and a second double-sided adhesive 6 bottom adhesive of the second double-sided adhesive 6 is connected to the first flexible cushioning member 5, and a second double-sided adhesive 6 top adhesive of the second double-sided adhesive 6 is used for connection to the protection board assembly 2, thereby achieving a connection between the cell 1 and the protection board assembly 2 at the location corresponding to the gap between the conductive sheets 21.

That is, in this embodiment, the first flexible cushioning member 5 is added at the gap between the two conductive sheets 21 to increase the bonding area of the double-sided adhesive. It will be understood that the first flexible cushioning member 5 is bonded to the first double-sided adhesive 4 at the position corresponding to the first flexible cushioning member 5, so that the first flexible cushioning member 5 compensates for the height at the gap between the two conductive sheets 21; and the first flexible cushioning member 5 is connected to the protection board assembly 2 by means of the second double-sided adhesive 6, thereby achieving the connection between the cell 1 and the protection board assembly 2 at the position corresponding to the gap between the two conductive sheets 21. This increases the bonding area, thus improving the reliability of the connection between the protection board assembly 2 and the cell 1, enabling the protection board assembly 2 to be firmly bonded to the cell 1, and preventing the protection board assembly 2 from displacing relative to the cell 1 and tearing the tab 11 when the battery falls, and thus preventing battery failure.

Further, in some embodiments, the first flexible cushioning member 5 has the same thickness as the conductive sheet 21, or the first flexible cushioning member 5 has a greater thickness than the conductive sheet 21. It will be understood that, without considering the thickness of the second double-sided adhesive 6, in order to enable two side of the first flexible cushioning member 5 to be connected to the first double-sided adhesive 4 and the protection board assembly 2, respectively, the thickness of the first flexible cushioning member 5 needs to be at least equal to the thickness of the conductive sheet 21, so that the first flexible cushioning member 5 effectively compensates for the height at the gap between the two conductive sheets 21, ensuring the reliability of the connection. When the thickness of the first flexible cushioning member 5 is greater than the thickness of the conductive sheet 21, it helps to absorb part of an impact force by means of the first flexible cushioning member 5 when the battery is subjected to an external impact, thereby protecting the protection board assembly 2 and the cell 1 and reducing the risk of components between the protection board assembly 2 and the cell 1 being crushed.

It will be understood that the thickness of the conductive sheet 21 is generally 0.5 mm, and accordingly, in some embodiments, the thickness of the first flexible cushioning member 5 is equal to 0.5 mm, or greater than 0.5 mm by a preset value.

It should be noted that, a specific material of the first flexible cushioning member 5 is not limited in this embodiment, as long as the first flexible cushioning member 5 functions to connect the protection board assembly 2 at the position corresponding to the gap between the two conductive sheets 21 to the cell 1. In some embodiments, the first flexible cushioning member 5 includes foam.

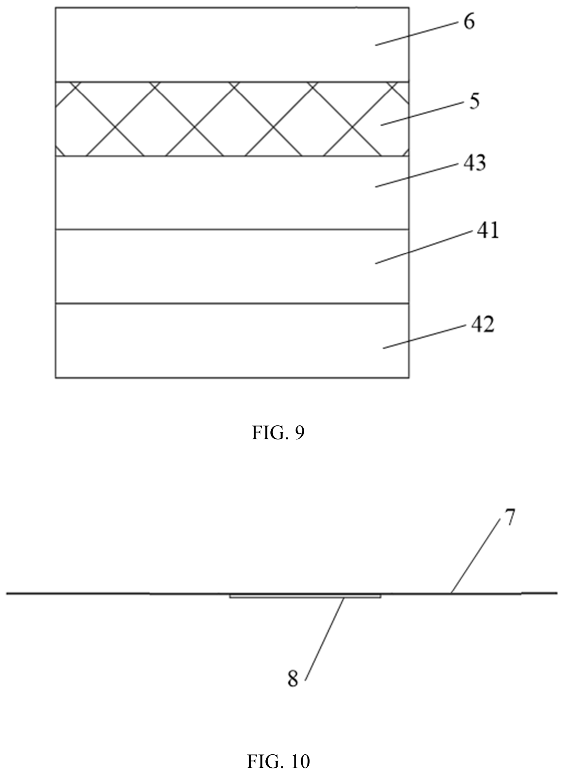

In addition, the protection board assembly 2 generally includes a protection board 22 and a flexible printed circuit board 23. After the protection board assembly 2 is mounted, two ends of the flexible printed circuit board 23 are attached to a top surface of the protection board 22 by means of a fixing adhesive 7 to prevent the flexible printed circuit board 23 located on the top surface of the protection board 22 from lifting. With reference to Figs. 6 and 10, in some embodiments, the protection board assembly 2 includes a protection board 22 and a flexible printed circuit board 23, and the flexible printed circuit board 23 includes a first end 231 and a second end 232 that are spaced apart by a preset distance. The battery further includes a fixing adhesive 7 and a second flexible cushioning member 8, where the fixing adhesive 7 is connected to a side surface of each of the first end 231 and the second end 232 that is close to the protection board 22, the second flexible cushioning member 8 is disposed between the first end 231 and the second end 232, and two sides of the second flexible cushioning member 8 are connected to the fixing adhesive 7 and the protection board 22, respectively. It will be understood that one side of the second flexible cushioning member 8 is connected to the fixing adhesive 7 and the other side of the second flexible cushioning member 8 may be connected to the protection board 22 by means of an adhesive (e.g., a third double-sided adhesive), thereby achieving a reliable connection between the second flexible cushioning member 8 and the protection board 22.

That is, in this embodiment, by adding the second flexible cushioning member 8 between the first end 231 and the second end 232 of the flexible printed circuit board 23, the second flexible cushioning member 8 is used to compensate for a space between the first end 231 and the second end 232; moreover, by connecting two sides of the second flexible cushioning member 8 to the fixing adhesive 7 and the protection board 22, respectively, the bonding area is increased, thereby fixing the flexible printed circuit board 23 more firmly.

Further, in some embodiments, the second flexible cushioning member 8 has the same thickness as the flexible printed circuit board 23, or the second flexible cushioning member 8 has a greater thickness than the flexible printed circuit board 23. It will be understood that in order to enable the two sides of the second flexible cushioning member 8 to be connected to the fixing adhesive 7 and the protection board 22, respectively, the thickness of the second flexible cushioning member 8 needs to be at least equal to the thickness of the flexible printed circuit board 23, so that the second flexible cushioning member 8 effectively compensates for a height space between the first end 231 and the second end 232 of the flexible printed circuit board 23, ensuring the reliability of the connection. In addition, when the thickness of the second flexible cushioning member 8 is greater than the thickness of the flexible printed circuit board 23, it helps to absorb part of an impact force by means of the second flexible cushioning member 8 when the battery is subjected to an external impact, thereby protecting the protection board assembly 2 and the cell 1 and reducing the risk of damage to the battery.

In addition, it should be noted that a specific length of the second flexible cushioning member 8 in a direction perpendicular to a line connecting the first end 231 to the second end 232 is not limited in this embodiment, as long as the second flexible cushioning member 8 connects the fixing adhesive 7 corresponding to a portion between the first end 231 and the second end 232 of the flexible printed circuit board 23 to the protection board 22, it functions to prevent the first end 231 and the second end 232 of the flexible printed circuit board 23 from lifting.

In some embodiments, the second flexible cushioning member 8 has a length less than or equal to a length of the fixing adhesive 7 in the direction perpendicular to the line connecting the first end 231 to the second end 232. That is, in the direction perpendicular to the line connecting the first end 231 to the second end 232, the length of the second flexible cushioning member 8 may be equal to the length of the fixing adhesive 7 or may be less than the length of the fixing adhesive 7, that is, two ends of the second flexible cushioning member 8 do not extend beyond two ends of the fixing adhesive 7.

In addition, it should be noted that a specific material of the second flexible cushioning member 8 is not limited in the above embodiments, as long as the second flexible cushioning member 8 functions to connect the fixing adhesive 7 to the protection board 22. In some embodiments, the second flexible cushioning member 8 includes a silicone gasket.

In addition to the battery described above, the present invention further provides an electronic apparatus including the battery disclosed in the above embodiments, which may be a mobile phone, a laptop, or other devices requiring electricity. For structures of other parts of the electronic apparatus, reference is made to the related art, which will not be described in detail herein.

The focus of this embodiment is to use the battery disclosed in any of the above embodiments, which has the same beneficial effects as the battery described above and will not be described in detail here.

It should also be noted that in the description, relationship terms such as "first" and "second" are merely used to distinguish an entity or operation from another entity or operation, and do not necessarily require or imply that any such actual relationship or order exists between those entities or operations.

All embodiments in the description are described in a progressive manner. Each embodiment focuses on differences from other embodiments. For the same or similar parts between various embodiments, reference may be made to each other.

The battery and the electronic apparatus of the present invention are described in detail above. The principle and implementations of the present invention are described herein by using specific examples, the above descriptions of the embodiments are merely intended to help understand the method and core concept of the present invention. It should be noted that for those of ordinary skills in the art, several improvements and modifications may also be made to the present invention without departing from the principle of the present invention, and these improvements and modifications also fall within the scope of protection of the present invention.

## Claims

1. A battery, comprising:
a cell (1) provided with a tab (11);
a protection board assembly (2) connected to a top end of the cell (1) and provided with a conductive sheet (21), the conductive sheet (21) being connected to the tab (11); and
a head tape (3) having two ends respectively connected to front and back surfaces of the cell (1) and wrapped around a periphery of the protection board assembly (2), the head tape (3) being provided with at least one layer of protective adhesive (31) at a position corresponding to the tab (11).

2. The battery according to claim 1, wherein a top sealing edge (12) is provided at the top end of the cell (1), the top sealing edge (12) comprises a first bent portion (121) and a flat portion (122), the flat portion (122) is parallel to an end face of the cell (1), the protection board assembly (2) is disposed on a surface of the flat portion (122) away from the cell (1), and a thickness direction of the protection board assembly (2) is in a height direction of the cell (1).

3. The battery according to claim 1 or 2, wherein the tab (11) comprises a second bent portion (111) and a connecting portion (112), the conductive sheet (21) is formed with a U-shaped groove, and the connecting portion (112) is disposed in the U-shaped groove; and
the protective adhesive (31) is disposed at the position corresponding to the second bent portion (111).

4. The battery according to any one of claims 1 to 3, wherein the head tape (3) comprises a cell connecting portion (32) connected to the cell (1), and an end of the protective adhesive (31) in a height direction of the cell (1) extends to a first boundary of the cell connecting portion (32) on a side close to the protective adhesive (31), or is spaced apart from the first boundary.

5. The battery according to any one of claims 1 to 4, wherein the head tape (31) comprises a top-surface connecting portion (33) connected to a top surface of the protection board assembly (2), and an end of the protective adhesive (31) in a height direction of the cell (1) extends to a second boundary of the top-surface connecting portion (33) on a side close to the protective adhesive (31), or is spaced apart from the second boundary.

6. The battery according to any one of claims 1 to 5, wherein the protective adhesive (31) is disposed on an inner side of the head tape (3).

7. The battery according to any one of claims 1 to 6, wherein the protective adhesive (31) has a length equal to or less than a length of the head tape (3) in a direction parallel to a width of the cell (1).

8. The battery according to any one of claims 1 to 7, wherein a first double-sided adhesive (4) is provided between the protection board assembly (2) and the cell (1), at least two conductive sheets (21) are provided, a first flexible cushioning member (5) is provided in a gap between any two of the conductive sheets (21), one side of the first flexible cushioning member (5) is connected to the first double-sided adhesive (4), a second double-sided adhesive (6) is provided on the other side of the first flexible cushioning member (5), and the second double-sided adhesive (6) is connected to the protection board assembly (2).

9. The battery according to claim 8, wherein the first flexible cushioning member (5) has a same thickness as the conductive sheet (21).

10. The battery according to claim 8, wherein the first flexible cushioning member (5) has a greater thickness than the conductive sheet (21).

11. The battery according to any one of claims 1 to 10, wherein the protection board assembly (2) comprises a protection board (22) and a flexible printed circuit board (23), the flexible printed circuit board (23) comprising a first end (231) and a second end (232) that are spaced apart by a preset distance; and the battery further comprises:
a fixing adhesive (7) connected to a side surface of each of the first end (231) and the second end (232) that is close to the protection board (22).

12. The battery according to any one of claim 11, further comprising a second flexible cushioning member (8) disposed between the first end (231) and the second end (232) and connected to the fixing adhesive (7) and the protection board (22).

13. The battery according to claim 12, wherein the second flexible cushioning member (8) has a same thickness as the flexible printed circuit board (23), or the second flexible cushioning member (8) has a greater thickness than the flexible printed circuit board (23).

14. The battery according to any one of claims 11 to 13, wherein the second flexible cushioning member (8) has a length less than or equal to a length of the fixing adhesive (7) in a direction perpendicular to a line connecting the first end (231) to the second end (232).

15. An electronic apparatus, comprising a battery according to any one of claims 1 to 14.
